# NEUE EUROPÄISCHE PATENTSCHRIFT

(11) **EP 0 422 000 B2**
(45) Veröffentlichungstag und Bekanntmachung des Hinweises auf die Entscheidung über den Einspruch: **02.05.2001**
(45) Hinweis auf die Patenterteilung: 23.11.1994
(21) Anmeldenummer: 89902025.9
(22) Anmeldetag: 10.02.1989
(51) Int. Cl.: B23K 1/00, B05C 1/08

(54) **VERFAHREN ZUM BELEIMEN UND BELOTEN EINES METALLISCHEN KATALYSATOR-TRÄGERKÖRPERS**
PROCESS FOR GLUING AND SOLDERING A METALLIC CATALYST CARRIER
PROCEDE D'ENCOLLAGE ET DE BRASAGE DU SUPPORT METALLIQUE D'UN CATALYSEUR

(30) Priorität: 31.05.1988 DE 3818512
(43) Veröffentlichungstag der Anmeldung: 17.04.1991
(73) Patentinhaber: SIEMENS AKTIENGESELLSCHAFT, 80333 München (DE)
(72) Erfinder: STAUBWASSER, Wolfgang, D-5060 Bergisch Gladbach 1 (DE)
(74) Vertreter: Kahlhöfer, Hermann, Dipl.-Phys.
(86) Internationale Anmeldenummer: DE8900080
(87) Internationale Veröffentlichungsnummer: WO8911938

(56) Entgegenhaltungen:
- EP-A- 136 514
- DE-A- 2 635 108
- DE-A- 2 924 592
- US-A- 3 479 731

## Beschreibung

Die vorliegende Erfindung betrifft ein Verfahren zum Beleimen und Beloten eines aus strukturierten Blechen aufgebauten Katalysator-Trägerkörpers für Kraftfahrzeuge.

Aus Lagen strukturierter Bleche gewickelte oder geschichtete Wabenkörper sind in vielfältigen Formen bekannt. Sie werden besonders für motornah eingesetzte Abgaskatalysatoren bei Kraftfahrzeugen benötigt. In der DE-A1-29 24 592 sind solche Körper und Verfahren zum Beleimen und Beloten beschrieben. Weitere Formen von Katalysator-Trägerkörpern, für die die vorliegende Erfindung geeignet ist, sind beispielsweise in der EP-A2-0 136 515, der EP-A2-0 159 468, der EP-A1-0 220 468, der EP-A1-0 245 737 und der EP-A1-0 245 738 enthalten. Aus der DE-A1-26 35 108 ist außerdem eine Vorrichtung zur Aufbringung von Klebstoff auf die Ränder von Blättern bekannt, jedoch nicht im Zusammenhang mit dem Aufbringen von Lot.

Nach dem Stand der Technik gibt es bisher mindestens drei Verfahren zum Beloten von Wabenkörpern für Abgaskatalysatoren von Kraftfahrzeugen nämlich einerseits Beleimen und Beloten vor dem Wickeln gemäß der DE-A1-29 24 592, weiter das stirnseitige Beleimen und Beloten nach dem Wickeln, welches ebenfalls in dieser Schrift beschrieben ist, und das trockene Beloten ohne die Verwendung von Klebern und Bindern gemäß EP-A2-0 136 514. Alle drei Arten eignen sich prinzipiell, haben jedoch verschiedene Nachteile. Beim Beloten vor dem Wickeln oder Schichten liegen Lotkörner zwischen den einzelnen Blechlagen, so daß beim Aufschmelzen der Lotkörner unerwünschte Abstände und Verschiebungen der Bleche untereinander auftreten können. Das stirnseitige Beleimen und Beloten führt entweder zu unerwünscht großen Lotmengen in den Spalten neben den Berührungsstellen oder es benötigt bei der Verwendung von Haftkleber eine zusätzliche Zeitspanne zum Trocknen des Klebers, bevor Lotpulver aufgebracht wird. Außerdem ermöglicht das nachträgliche stirnseitige Beloten nicht die selektive Verlötung einzelner Streifen im Inneren des Wabenkörpers. Das trockene Beloten erfordert relativ aufwendige Vorrichtungen und eine bestimmte Zusammensetzung des Lotes in bezug auf die Lotkörner.

Aufgabe der vorliegenden Erfindung ist ein Verfahren, welches die genannten Nachteile des Standes der Technik vermeidet und einen schnellen Fertigungsablauf bei hoher Qualität der späteren Lötverbindungen ermöglicht.

Außerdem sollen die Wabenkörper hohen thermischen Belastungen, insbesondere bei motornahem Einbau, standhalten können.

Aus der US 3,479,731 ist außerdem ein Verfahren zum Löten von Wabenkörpern bekannt, bei welchem zunächst Kleber oder Binder auf strukturierte Bleche aufgetragen, die Bleche dann gewickelt und danach mit Lotpulver beaufschlagt werden. Das Lotpulver bleibt an den mit Kleber oder Binder versehenen stellen haften, und der Wabenkörper wird anschließend gelötet.

Zur Lösung dieser Aufgabe wird ein Verfahren mit den Merkmalen des Anspruchs 1 vorgeschlagen. Vorteilhafte Ausgestaltungen des Verfahrens sind in den abhängigen Ansprüchen angegeben.

Die erfindungsgemäße Vorgehensweise ermöglicht unter anderem einen besonders zeitsparenden Verfahrensablauf. Während des Transportes der strukturierten Bleche zu einer Wickel- oder Schichtmaschine können diese in den gewünschten Bereichen mit Kleber oder Binder versehen werden. Dieser setzt sich beim Wickeln oder Schichten durch Kapillarwirkung gerade in den Spalten neben den Verbindungsstellen fest, so daß später gerade dort Lotkörner haften können, wo diese auch benötigt werden. Eine selektive Belotung von Streifen im Inneren des Wabenkörpers, ohne daß Lotkörner sich unerwünscht zwischen die Berührungsflächen klemmen, wird erstmals möglich.

Besonders günstig ist das Verfahren bei der Verwendung von Haftkleber. Aus der EP-A1-0 049 489 sind die Vorteile einer Verwendung von Haftkleber in bezug auf die Dosierung der Lotmenge eingehend beschrieben. Bei dem erfindungsgemäßen Verfahren fällt die Trocknungszeit des Haftklebers mit der Zeit für das Wickeln oder Schichten des Wabenkörpers zusammen, so daß der Ablauf vereinfacht wird. Außerdem werden zwar die Vorteile der Verwendung von Haftkleber erreicht, nicht jedoch die Nachteile in Kauf genommen, die bei dem bekannten Verfahren durch Lotkörner zwischen den Verbindungsstellen der Bleche entstehen konnten.

Das erfindungsgemäße Verfahren ermöglicht es ferner, unter Beibehaltung der Vorteile einer stirnseitigen Belotung nach dem Wickeln oder Schichten trotzdem nur selektiv die Berührungsstellen zu beloten und nicht sämtliche Flächen in Stirnseitennähe. Dies kann erreicht werden, indem die gewellten Bleche nur auf ihren Kuppen streifenweise oder in kleinen Teilbereichen beleimt werden. Dies spart Lot und verringert das Risiko von späteren Erosionen im Betrieb durch Auflegieren des Grundmaterials mit dem Lot. Kombinationen des Beleimens von glatten und gewellten Blechen sind möglich.

Das Auftragen von Kleber oder Binder kann beispielsweise durch schwammartige mit Kleber oder Binder tränkbare Walzen erfolgen, welche seitlich neben und/oder über und/oder unter dem Transportweg der strukturierten Bleche angeordnet sind. Diese Walzen können die strukturierten Bleche in den gewünschten Teilbereichen berühren und sie dadurch streifenweise und/oder auf den Kuppen der Wellungen beleimen. Solche schwammartigen Walzen können freilaufend angeordnet werden, so daß sie durch das vorbeilaufende Blech beim Beleimen in Rotation versetzt werden, wodurch eine gleichmäßige Versorgung mit Kleber oder Binder gewährleistet wird und durch einen gewissen unvermeidbaren Schlupf zwischen Walzen und Blechen gleichmäßige Schichtdicken von Kleber oder Binder erreicht werden.

Die Erfindung wird anhand von Ausführungsbeispielen schematisch in der Zeichnung näher erläutert. Es zeigen
Figur 1 einen spiralig gewickelten Katalysator-Trägerkörper während des Wickelvorganges und
Figur 2 schematisch eine Vorrichtung zum Auftragen von Kleber oder Binder.

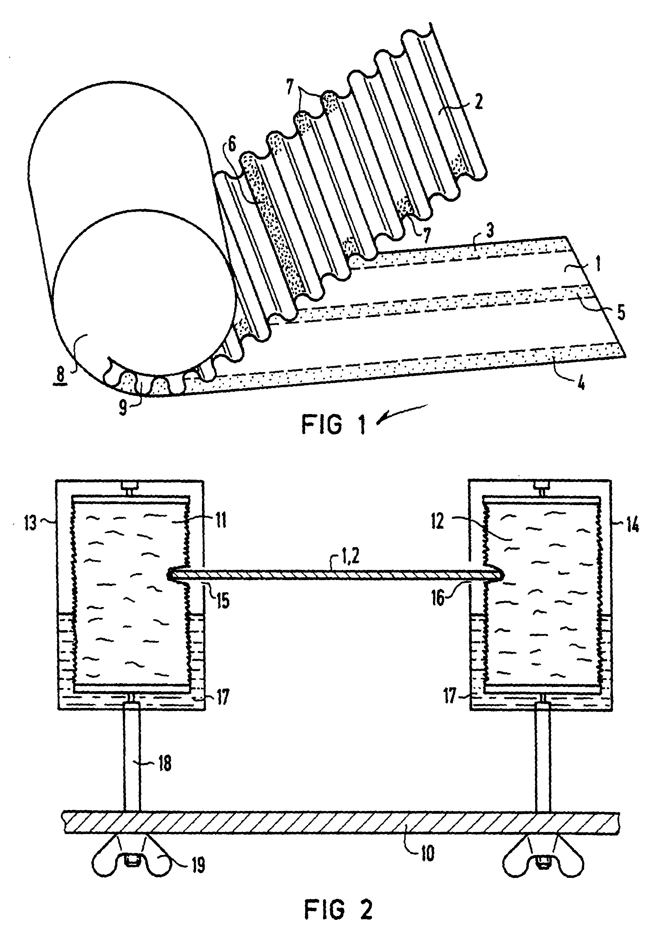

Figur 1 zeigt einen spiralig gewickelten Katalysator-Trägerkörper 8 aus glatten 1 und gewellten Blechen 2 kurz vor dem Ende des Wickelvorganges. Ein solcher Wabenkörper weist eine Vielzahl von für ein Fluid durchlässigen Kanälen 9 auf. Anhand der noch nicht fertig aufgewickelten Teilstücke der Bleche 1, 2 werden verschiedene Möglichkeiten der Beleimung vor dem Wickeln veranschaulicht Eine solche Beleimung kann beispielsweise auf dem glatten Blech 1 in Randbereichen 3, 4 erfolgen, sie kann jedoch auch Streifen 5 im Inneren des zu wickelnden Wabenkörpers 8 betreffen. Günstig kann auch eine Beleimung des gewellten Bleches 2 sein, wobei sich auch hier vielfältige Möglichkeiten bieten. Erfindungsgemäß wird der Kleber oder Binder nur auf den Kuppen der Wellungen aufgetragen. Dies kann über die ganze Breite des Bleches gehen, wie der beleimte Bereich 6 veranschaulicht. Eine andere Möglichkeit ist, sämtliche oder in Abständen einige Kuppen im Randbereich des Bleches zu beloten, wie dies durch die Bereiche 7 veranschaulicht wird. Erfindungsgemäß wird eine Kombination der angegebenen Möglichkeiten eingesetzt bei der ein Teil der Kuppen der Wellungen auf der gesamten Länge (6) und ein anderer Teil der Kuppen nur in Teilbereichen (7) mit Kleber oder Binder beschichtet wird. Das hier anhand eines spiralig gewickelten Katalysator-Trägerkörpers veranschaulichte Verfahren eignet sich auch für geschichtete Wabenkörper oder solche aus gegensinnig verschlungenen Blechstapeln, wie sie im Stand der Technik bekannt sind.

Figur 2 zeigt schematisch eine Vorrichtung zum Auftragen von Kleber oder Binder, und zwar im vorliegenden Ausführungsbeispiel für die seitliche Beleimung von glatten oder gewellten Blechbändern auf der Ober- und Unterseite. Auf einer Halteplatte 10 sind zwei schwammartige Walzen 11, 12 in einem solchen Abstand montiert, daß sich ein zwischen den beiden Walzen hindurchgeführtes glattes 1 oder gewelltes 2 Blech auf beiden Seiten um einige Millimeter in die schwammartigen Walzen 11, 12 eindrückt. Die Walzen 11, 12 sind in Gehäusen 13, 14 angeordnet, welche Öffnungen 15, 16 zur Durchführung der Bleche 1, 2 aufweisen. Im Inneren der Gehäuse 13, 14 kann beispielsweise ein Vorrat 17 an Kleber oder Binder vorhanden sein. Die Gehäuse 13, 14 sind auf Halterungen 18 montiert, welche ihrerseits in Langlöchern der Strukturplatte 10 befestigt sind, beispielsweise mit Flügelschrauben 19. Dies ermöglicht eine einfache Einstellung auf unterschiedliche Breiten der Bleche 1, 2. Die Walzen 11, 12 sind rotierbar gelagert und können entweder selbst angetrieben sein oder von den durchgeführten Blechen rotiert werden.

Je nach der Beschaffenheit der Walzen 11, 12 ermöglicht diese Vorrichtung ein streifenweises Beleimen der Ränder glatter Bleche oder das streifenweise Beleimen der Kuppen von gewellten Blechen im Randbereich.

## Patentansprüche

1. Verfahren zum Herstellen eines aus Lagen strukturierter Bleche (1, 2) gewickelten oder geschichteten Katalysator-Trägerkörpers (8) für Kraftfahrzeuge mit vielen für ein Fluid durchlässigen Kanälen (9) mit folgenden Merkmalen:
a) vor dem Wickeln oder Schichten werden die strukturierten Bleche (1, 2) in den später zu belotenden und zu verlötenden Bereichen (3; 4; 5; 6; 7) mit einem Kleber oder Binder beschichtet, wobei ein Teil der Kuppen der Wellungen auf der gesamten Länge (6) und ein anderer Teil der Kuppen der Wellungen nur in Teilbereichen (7) mit Kleber oder Binder beschichtet wird;
b) die Bleche (1, 2) werden zu dem Katalysator-Trägerkörper (8) gewickelt oder geschichtet;
c) der gewickelte oder geschichtete Körper (8) wird mit Lotpulver beaufschlagt, so daß dieses alle beschichteten Stellen (3; 4; 5; 6; 7) erreicht und dort haften bleibt;
d) überschüssiges Lotpulver wird aus dem Katalysator-Trägerkörper (8) entfernt, vorzugsweise herausgeschüttelt oder -geblasen;
e) der Katalysator-Trägerkörper wird durch Aufschmelzen des Lotpulvers verlötet; und
f) der Katalysator-Trägerkörper wird mit katalytisch aktivem Material versehen.

2. Verfahren nach Anspruch 1,
**dadurch gekennzeichnet**, daß als Kleber ein Haftkleber verwendet wird.

3. Verfahren nach Anspruch 2, **dadurch gekennzeichnet**, daß das Wickeln oder Schichten erfolgt, bevor der Haftkleber vollständig getrocknet ist.

4. Verfahren nach Anspruch 1, 2 oder 3, **dadurch gekennzeichnet**, daß die in Teilbereichen (7) beschichteten Kuppen der Wellungen streifenweise mit Binder oder Kleber versehen werden, wobei der oder die Streifen senkrecht oder in einem Winkel zur Struktur der Bleche (1, 2) verläuft (bzw. verlaufen).

5. Verfahren nach einem der vorhergehenden Ansprüche,
**dadurch gekennzeichnet**, daß die Kuppen der strukturierten Bleche (1, 2) zumindest in einer schmalen Zone (3, 4) an einem oder beiden Rändern mit Kleber oder Binder versehen werden, so daß zumindest eine oder beide Stirnseiten des herzustellenden Wabenkörpers (8) Lötverbindungen erhalten.

6. Verfahren nach einem der vorhergehenden Ansprüche,
**dadurch gekennzeichnet**, daß die Kuppen der in Teilbereichen (7) beschichteten strukturierten Bleche (1, 2) streifenweise mit Kleber oder Binder versehen werden, und zwar so, daß später im Inneren des herzustellenden Wabenkörpers (8) Lötverbindungen mit Abstand zu den Stirnseiten entstehen.

7. Verfahren nach einem der vorhergehenden Ansprüche,
**dadurch gekennzeichnet**, daß als strukturierte Bleche glatte (1) und gewellte (2) Bleche in abwechselnden Lagen verwendet werden.

## Claims

1. Process for fabricating a catalyst carrier body (8) for motor vehicles wound or layered from layers of structured metal sheets (1, 2) and having a plurality of channels (9) for the passage of a fluid, with the following features:
a) before the winding or layering the structured metal sheets (1, 2) are coated with an adhesive or binder in the zones (3; 4; 5; 6; 7) to be subsequently coated with brazing material and brazed, wherein a part of the crests of the corrugations is coated on the entire length (6) and another part of the crests of the corrugations is coated only in partial zones (7) with the adhesive or binder;
b) the metal sheets (1, 2) are wound or layered to form the catalyst carrier body;
c) brazing powder is applied to the wound or layered body (8) so that it reaches all the coated positions (3; 4; 5; 6; 7) and remains adhered there;
d) excess brazing powder is removed from the catalyst carrier body (8), preferably by shaking out or blowing out;
e) the catalyst carrier body is brazed by melting the brazing powder; and
f) the catalyst carrier body is provided with catalytically active material.

2. Process according to claim 1 characterized in that the adhesive used is a bonding emulsion.

3. Process according to claim 2 characterized in that the winding or layering takes place before the bonding emulsion is completely dry.

4. Process according to claim 1, 2 or 3 characterized in that the crests of the corrugations coated in partial regions (7) are provided with strips of binder or adhesive, the one or more strips extending perpendicularly or at an angle to the structure of the metal sheets (1, 2).

5. Process according to one of the preceding claims characterized in that the crests of the structured metal sheets (1, 2) are provided with adhesive or binder at least in one narrow zone (3, 4) on one or both edges so that at least one, or both, end surfaces of the honeycomb body (8) to be produced contain brazed joints.

6. Process according to one of the preceding claims characterized in that the crests of the structured metal sheets (1, 2) coated in partial regions (7) are provided with strips of adhesive or binder so that brazed joints are subsequently formed inside the honeycomb body (8) to be produced, spaced apart from the end surfaces.

7. Process according to one of the preceding claims characterized in that smooth (1) and corrugated (2) metal sheets in alternate layers are used as structured metal sheets.

## Revendications

1. Procédé destiné à la fabrication d'un corps support de catalyseur (8) pour véhicules automobiles enroulé ou empilé á partir de couches de tôles structurées (1, 2) et comportant un grand nombre de canaux (9) pour laisser passer un fluide, présentant les caractéristiques suivantes :
a) avant l'enroulement ou l'empilage les tôles structurées (1,2) sont recouvertes avec une colle ou un liant dans les zones (3 ; 4 ; 5 ; 6 ; 7) qui doivent être ultérieurement garnies de brasure et brasées, une partie des sommets des ondulations étant recouverte sur toute la longueur (6) et une autre partie des sommets des ondulations étant recouverte uniquement dans des zones partielles (7) avec de la colle ou du liant ;
b) les tôles sont enroulées ou empilées pour former un corps support de catalyseur (8) ;
c) de la brasure en poudre est appliquée sur le corps enroulé ou empilé de manière que cette poudre atteigne tous les emplacements garnis (3 ; 4 ; 5 ; 6 ; 7) et y adhère ;
d) l'excès de brasure en poudre est éliminé du corps support de catalyseur (8), de préférence par secouage ou soufflage ;
e) le corps support de catalyseur est brasé par fusion ; et
f) le corps support de catalyseur est pourvu de matériau à effet catalytique.

2. Procédé selon la revendication 1, caractérisé en ce qu'une colle adhésive est utilisée comme colle.

3. Procédé selon la revendication 2, caractérisé en ce que l'enroulement ou l'empilage est exécuté avant que la colle adhésive soit complètement sèche.

4. Procédé selon la revendication 1, 2 ou 3, caractérisé en ce que les sommets des ondulations recouverts dans des zones partielles (7) sont pourvus de liant ou de colle sous forme de bandes, auquel cas la ou les bandes s'étendent perpendiculairement ou suivant un angle par rapport à la structure des tôles (1, 2).

5. Procédé selon l'une de revendications précédentes, caractérisé en ce que les sommets des tôles structurées (1, 2) sont pourvus au moins dans une zone étroite (3, 4), au niveau d'un ou des deux bords, de colle ou de liant, de sorte qu'au moins une ou les deux faces frontales du corps alvéolaire (8) devant être fabriqué reçoivent des liaisons brasées.

6. Procédé selon l'une des revendications précédentes, caractérisé en ce que les sommets des tôles structurées (1, 2) recouvertes dans des zones partielles (7) sont pourvus sous forme de bandes de colle ou de liant, et ce de manière à obtenir ultérieurement à l'intérieur du corps alvéolaire (8) devant être fabriqué, des liaisons brasées à distance des faces frontales.

7. Procédé selon l'une des revendications précédentes, caractérisé en ce que comme tôles structurées des tôles lisses (1) et des tôles ondulées (2) selon des couches alternées sont utilisées.
